(19) Europäisches Patentamt
European Patent Office
Office européen des brevets

(11) EP 4 506 394 A1

(12) EUROPEAN PATENT APPLICATION
published in accordance with Art. 153(4) EPC

(43) Date of publication:
**12.02.2025 Bulletin 2025/07**

(21) Application number: **23784769.4**

(22) Date of filing: **05.04.2023**

(51) International Patent Classification (IPC):
***C08J 3/00** (2006.01)* ***C08L 27/12** (2006.01)*
***C08L 27/18** (2006.01)*

(52) Cooperative Patent Classification (CPC):
**C08J 3/00; C08J 3/16; C08J 3/24; C08L 27/12; C08L 27/18**

(86) International application number:
**PCT/JP2023/014080**

(87) International publication number:
**WO 2023/195485 (12.10.2023 Gazette 2023/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.04.2022 JP 2022063403**

(71) Applicant: **DAIKIN INDUSTRIES, LTD.**
**Osaka-shi, Osaka 530-0001 (JP)**

(72) Inventors:
- **NOHARA, Asuka**
  **Osaka-Shi, Osaka 530-0001 (JP)**
- **KONISHI, Tomohisa**
  **Osaka-Shi, Osaka 530-0001 (JP)**
- **OTA, Daisuke**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

# (54) COMPOSITION AND CROSSLINKED PRODUCT

(57) Provided is a composition comprising a perfluoroelastomer and a polytetrafluoroethylene, wherein a melt viscosity of the polytetrafluoroethylene is $1.0 \times 10^3$ to $7.0 \times 10^6$ poise, a melting point of the polytetrafluoroethylene is 322°C or higher, and the composition is obtained by co-coagulating the perfluoroelastomer and the polytetrafluoroethylene.

EP 4 506 394 A1

## Description

TECHNICAL FIELD

The present disclosure relates to a composition and a crosslinked product.

BACKGROUND ART

Conventionally, techniques of adding a fluororesin to a perfluoroelastomer to improve the physical properties of the perfluoroelastomer are known.
For example, Patent Document 1 discloses a composition containing fluoroplastic particles having an average particle size of smaller than 500 nm and an amorphous fluoropolymer.
Patent Document 2 discloses a fluorine-based composition for a sealing material obtained by adding an inorganic acid solution to a liquid mixture obtained by mixing a suspension of a fluorine-based elastic body and a suspension of a fluorine-based resin such that the mass mixing ratio between the fluorine-based elastic body and the fluorine-based resin is within a range of 95:5 to 5:95 and causing co-coagulation.

RELATED ART

PATENT DOCUMENTS

Patent Document 1: Japanese Translation of PCT International Application Publication No. 2018-531316
Patent Document 2: Japanese Patent Laid-Open No. 2003-26811

SUMMARY OF THE INVENTION

PROBLEM TO BE SOLVED BY THE INVENTION

An object of the present disclosure is to provide a composition capable of providing a crosslinked product which is less likely to crack even when compressed at a high temperature and has excellent plasma resistance and an excellent compression set property.

MEANS FOR SOLVING THE PROBLEM

The present disclosure provides a composition, comprising a perfluoroelastomer and a polytetrafluoroethylene, wherein a melt viscosity of the polytetrafluoroethylene is $1.0 \times 10^3$ to $7.0 \times 10^6$ poise, a melting point of the polytetrafluoroethylene is 322°C or higher, and the composition is obtained by co-coagulating the perfluoroelastomer and the polytetrafluoroethylene.

EFFECTS OF INVENTION

The present disclosure can provide a composition capable of providing a crosslinked product which is less likely to crack even when compressed at a high temperature and has excellent plasma resistance and an excellent compression set property.

DESCRIPTION OF EMBODIMENTS

Hereinafter, specific embodiments of the present disclosure will now be described in detail, but the present disclosure is not limited to the following embodiments.
The composition of the present disclosure contains a perfluoroelastomer and a polytetrafluoroethylene (PTFE).
In conventional techniques of adding a fluoroplastic or a fluorine-based resin to a perfluoroelastomer, there is an advantage of particles being less likely to be generated compared with techniques of adding a filler such as inorganic particles to a perfluoroelastomer. However, there is a demand for a perfluoroelastomer composition capable of providing a crosslinked product which has excellent plasma resistance, is less likely to crack while being continuously compressed at a high temperature, and has a shape that is easily restored when released from compression.
The present inventors have found that, a crosslinked product obtained by crosslinking a composition prepared by

selecting a PTFE as a fluororesin, moreover, appropriately selecting the melt viscosity and melting point of the PTFE, and selecting a method involving co-coagulating a perfluoroelastomer and the PTFE as a method for preparing the composition, is less likely to crack even when compressed at a high temperature and has excellent plasma resistance and an excellent compression set property, thereby completing the composition of the present disclosure.

(PTFE)

The melt viscosity of the PTFE that the composition of the present disclosure contains is $1.0 \times 10^3$ to $7.0 \times 10^6$ poise. The melt viscosity is preferably $1.0 \times 10^4$ poise or more, more preferably $1.0 \times 10^5$ poise or more, and is preferably $5.0 \times 10^6$ or less, more preferably $3.0 \times 10^6$ poise or less, and even more preferably $1.0 \times 10^6$ or less.

The use of the PTFE having a melt viscosity within the above range makes it possible to obtain a crosslinked product having excellent plasma resistance and an excellent compression set property when the composition has been crosslinked. When the melt viscosity of the PTFE is too high, the compression set property of the crosslinked product does not sufficiently improve, and for example, when the crosslinked product has been compressed for a long period of time at a high temperature of about 300°C, there is a problem in that the crosslinked product is crushed due to compression or a problem in that the shape of the crosslinked product is not easily restored. PTFEs having a too low melt viscosity may cause a concern of the generation of a high-temperature volatile component and thus cannot be suitably used for a crosslinked product that is used at a high temperature (for example, about 300°C) in some cases.

The PTFE having a melt viscosity within the above range is a PTFE having a low molecular weight, for example, a number average molecular weight of 600,000 or lower. "High molecular weight PTFE" having a number average molecular weight of more than 600,000 develops a fibrillation property peculiar to PTFEs (for example, refer to Japanese Patent Laid-Open No. 10-147617). High molecular weight PTFEs have a high melt viscosity and are non melt-processible. The PTFE that the composition of the present disclosure contains preferably does not exhibit a fibrillation property that is high enough for paste extrusion forming. The melt viscosity and number average molecular weight of the PTFE can be adjusted by adjusting the polymerization conditions of a TFE at the time of producing the PTFE or by irradiating the PTFE with electron beams.

The melt viscosity is a value measured in conformity with ASTM D1238, using a flow tester (manufactured by Shimadzu Corporation) and a 2φ-8L die and keeping 2 g of the sample that has been heated in advance at 380°C for 5 minutes, at the above temperature under a load of 0.7 MPa. The number average molecular weight can be each calculated from the melt viscosity measured by the above-described measurement method.

The melting point of the PTFE that the composition of the present disclosure contains is 322°C or higher. The melting point is preferably 323°C or higher, more preferably 324°C or higher, even more preferably 325°C or higher and is preferably 333°C or lower, more preferably 332°C or lower, and even more preferably 330°C or lower.

When the melting point of the PTFE is too low, the compression set property of the crosslinked product does not sufficiently improve, and for example, when the crosslinked product has been compressed for a long period of time at a high temperature of about 300°C, the PTFE melts, and there is thus a problem in that the shape of the crosslinked product is not easily restored.

Regarding the melting point of the PTFE, temperature calibration is performed in advance using a differential scanning calorimeter X-DSC7000 (DSC) manufactured by Hitachi High-Tech Science Corporation and indium and tin as standard samples, about 3 mg of a PTFE having no history of being heated to a temperature of 300°C or higher is put into an aluminum pan and heated within a temperature range of 230°C to 350°C at 10 °C/min under 40 ml/min of a nitrogen stream to perform differential scanning calorimetry, and a temperature corresponding to the minimum point of the melting curve in the above temperature range can be measured as the melting point.

The specific surface area of the PTFE is preferably 0.5 to 20 $m^2/g$. The specific surface area is measured by the BET method using a surface analyzer (trade name: BELSORP-miniII, manufactured by Microtrac), a gas mixture of 30% of nitrogen and 70% of helium as a carrier gas, and liquid nitrogen for cooling.

The average primary particle size of the PTFE is preferably 10 nm to 1000 μm, more preferably 100 nm or more, even more preferably 200 nm or more, and is more preferably 100 μm or less, even more preferably 10 μm or less, particularly preferably 1 μm or less, and particularly preferably 500 nm or less.

The average primary particle size was determined by calculating the correlation between the transmittance of a predetermined cell injected with a PTFE aqueous dispersion adjusted to 0.15% by mass solids with 550 nm light and the number average primary particle size calculated by measuring the Feret diameter by a transmission electron micrograph, and then applying the measured transmittance of the obtained sample to the above correlation (calibration curve method).

The PTFE may be a homopolymer of a tetrafluoroethylene (TFE) or may be a modified PTFE including a TFE unit and a modifying monomer unit copolymerizable with TFEs. The PTFE is preferably a PTFE including a TFE unit and a modifying monomer unit copolymerizable with TFEs since the compression set property of the crosslinked product further improves.

The content of the modifying monomer unit in the PTFE is 0 to 0.10 mol%, more preferably 0.02 mol% or more,

even more preferably 0.05 mol or more, and is more preferably 0.09 mol% or less, based on all of the monomer units.

In the present disclosure, the modifying monomer unit means a portion derived from a modifying monomer in one portion of the molecular structure of the PTFE, and all of the monomer units mean portions derived from all monomers in the molecular structure of the PTFE. The content of the modifying monomer unit is a value measured by performing infrared spectroscopy or NMR (nuclear magnetic resonance).

The modifying monomer in the modified PTFE is not limited as long as the modifying monomer can be copolymerized with TFEs, and examples thereof include perfluoroolefins such as hexafluoropropylene [HFP]; chlorofluoroolefins such as chlorotrifluoroethylene [CTFE]; hydrogen-containing fluoroolefins such as trifluoroethylene and vinylidene fluoride [VDF]; perfluorovinyl ethers; perfluoroalkylethylenes; and ethylene. In addition, one kind of modifying monomer may be used or a plurality of kinds of modifying monomers may be used.

The perfluorovinyl ethers are not limited, and examples thereof include unsaturated perfluoro compounds represented by general formula (I):

$CF_2$=CF-Orf (I)

wherein Rf represents a perfluoro organic group. In the present specification, the "perfluoro organic group" means an organic group in which all of the hydrogen atoms bonding to a carbon atom have been substituted with fluorine atoms. The perfluoro organic group may have ether oxygen.

Examples of the perfluorovinyl ethers include perfluoro(alkyl vinyl ethers) [PAVE] that is the general formula (I) in which Rf represents a perfluoroalkyl group having 1 to 10 carbon atoms. The perfluoroalkyl group preferably has 1 to 5 carbon atoms.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group. Perfluoromethyl vinyl ethers [PMVE] in which the perfluoroalkyl group is a perfluoromethyl group or perfluoropropyl vinyl ethers [PPVE] in which the perfluoroalkyl group is a perfluoropropyl group are preferable.

Examples of the perfluorovinyl ethers further include unsaturated perfluoro compounds for which, in the general formula (I), Rf is a perfluoro(alkoxyalkyl) group having 4 to 9 carbon atoms, unsaturated perfluoro compounds for which Rf is represented by the following formula (I):

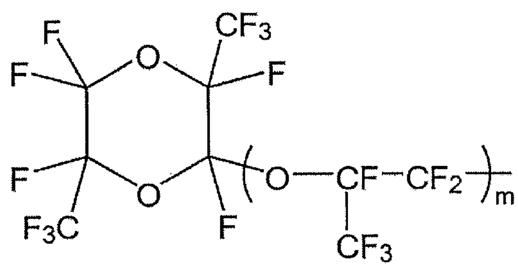

wherein m represents 0 or an integer of 1 to 4, and unsaturated perfluoro compounds for which Rf is represented by the following formula:

$CF_3CF_2CF_2$-(O-CF($CF_3$)-$CF_2$)$_n$-

wherein n represents an integer of 1 to 4.

The perfluoroalkylethylenes are not limited, and examples thereof include perfluorobutylethylene (PFBE), perfluorohexylethylene, and perfluorooctylethylene.

The modifying monomer in the modified PTFE is preferably at least one selected from the group consisting of HFP, CTFE, VDF, perfluorovinyl ether, PFBE, and ethylene, more preferably at least one selected from the group consisting of HFP, and perfluorovinyl ether, and more preferably at least one selected from the group consisting of HFP, PMV, and PPVE.

The content of the PTFE in the composition is preferably 1 to 100 parts by mass, more preferably 5 parts by mass or more, even more preferably 10 part by mass or more, particularly preferably 15 parts by mass or more, and is more preferably 70 parts by mass or less, and even more preferably 60 parts by mass or less, based on 100 parts by mass of the perfluoroelastomer since it is possible to obtain a crosslinked product having more excellent plasma resistance and a more excellent compression set property. The content of the PTFE in the composition is more preferably 55 parts by mass or less and particularly preferably 50 parts by mass or less since it is possible to obtain a crosslinked product having an even more excellent compression set property.

(Perfluoroelastomer)

The composition of the present disclosure comprises a perfluoroelastomer. The composition of the present disclosure contains a perfluoroelastomer as fluoroelastomer and is thus capable of providing a crosslinked product having excellent plasma resistance and an excellent compression set property when the composition has been crosslinked.

The perfluoroelastomer in the present disclosure means a fluoropolymer having a perfluoromonomer unit content of 90 mol% or more and preferably 91 mol% or more based on all of the monomer units, having a glass transition temperature of 20°C or lower, having a melting peak (ΔH) of 4.5 J/g or lower, and having a fluorine atom concentration in the fluoropolymer of 71% by mass or more and preferably 71.5% by mass or more. The fluorine atom concentration in the fluoropolymer in the present disclosure is the concentration (% by mass) of the fluorine atoms contained in the fluoropolymer calculated based on the type and content of each monomer constituting the fluoropolymer.

In the present disclosure, the perfluoromonomer is a monomer that does not contain a carbon-hydrogen bond within the molecule. The perfluoromonomer may be a monomer containing carbon atoms and fluorine atoms in which some of the fluorine atoms bonded to any of the carbon atoms are replaced by chlorine atoms, and may be a monomer containing nitrogen atom, oxygen atom, sulfur atom, phosphorus atom, boron atom, or silicon atom in addition to the carbon atoms. The perfluoromonomer is preferably a monomer in which all hydrogen atoms are replaced with fluorine atoms. A monomer that provides a crosslinking site is not encompassed within the perfluoromonomer.

The monomer that provides a crosslinking site is a monomer (a cure site monomer) having a crosslinkable group that provides the fluoropolymer with a crosslinking site for forming a crosslink with a curing agent.

In the present disclosure, the content of each monomer constituting the perfluoroelastomer can be calculated by suitably combining NMR, FT-IR, elemental analysis, fluorescent X-ray analysis, and other known methods according to the type of monomer.

The perfluoromonomer that provides a perfluoromonomer unit constituting the perfluoroelastomer is preferably at least one selected from the group consisting of:

tetrafluoroethylene (TFE);
hexafluoropropylene (HFP);
a fluoromonomer represented by general formula (13): $CF_2$=CF-$ORf^{13}$
wherein $Rf^{13}$ represents a perfluoroalkyl group having 1 to 8 carbon atoms;
a fluoromonomer represented by general formula (14): $CF_2$=$CFOCF_2ORf^{14}$
wherein $Rf^{14}$ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms including 1 to 3 oxygen atoms; and
a fluoromonomer represented by general formula (15):

$$CF_2=CFO(CF_2CF(Y^{15})O)_m(CF_2)_nF$$

wherein $Y^{15}$ represents a fluorine atom or a trifluoromethyl group, m is an integer of 1 to 4, and n is an integer of 1 to 4.

The perfluoroelastomer is preferably at least one selected from the group consisting of perfluoroelastomers having a TFE unit, such as a copolymer of TFE/a fluoromonomer represented by general formula (13), (14), or (15), and a copolymer of TFE/a fluoromonomer represented by general formula (13), (14), or (15)/a monomer that provides a crosslinking site.

In the case of a copolymer of TFE/perfluoro(methyl vinyl ether) (PMVE), the compositional feature is preferably 45 to 90/10 to 55 (mol%), more preferably 55 to 80/20 to 45, even more preferably 55 to 70/30 to 45, and most preferably 56 to 69.5/30.5 to 44.

In the case of a copolymer of TFE/PMVE/a monomer that provides a crosslinking site, the compositional feature is preferably 45 to 89.9/10 to 54.9/0.01 to 4 (mol%), more preferably 55 to 77.9/20 to 49.9/0.01 to 3.5, even more preferably 55 to 69.8/30 to 44.8/0.2 to 3, and most preferably 55.3 to 69.5/30.3 to 44.5/0.2 to 2.8.

In the case of a copolymer of TFE/a fluoromonomer having 4 to 12 carbon atoms and represented by general formula (13), (14), or (15), the compositional feature is preferably 50 to 90/10 to 50 (mol%), more preferably 60 to 88/12 to 40, even more preferably 65 to 85/15 to 35, and most preferably 66 to 84/16 to 34.

In the case of a copolymer of TFE/a fluoromonomer having 4 to 12 carbon atoms and represented by general formula (13), (14), or (15)/a monomer that provides a crosslinking site, the compositional feature is preferably 50 to 89.9/10 to 49.9/0.01 to 4 (mol%), more preferably 60 to 87.9/12 to 39.9/0.1 to 3.5, even more preferably 65 to 84.8/15 to 34.8/0.2 to 3, and most preferably 66 to 84.3/15.5 to 33.8/0.2 to 2.8.

When the compositional feature is outside these ranges, the copolymer does not have properties of a rubber elastic body, and tends to have properties similar to those of a resin.

The perfluoroelastomer is preferably at least one selected from the group consisting of a copolymer of TFE/a fluoromonomer represented by general formula (15)/a monomer that provides a crosslinking site, a copolymer of TFE/a fluoromonomer represented by general formula (15), a copolymer of TFE/a fluoromonomer represented by general formula (13)/a monomer that provides a crosslinking site, and a copolymer of TFE/a fluoromonomer represented by general formula (13),

Examples of the perfluoroelastomer include perfluoroelastomers described in International Publication No. WO 97/24381, Japanese Patent Laid-Open No. 61-57324, Japanese Patent Laid-Open No. 4-81608, Japanese Patent Laid-Open No. 5-13961, and the like.

The monomer that provides a crosslinking site is a monomer (a cure site monomer) having a crosslinkable group that provides the perfluoroelastomer with a crosslinking site for forming a crosslink with a curing agent.

Examples of the monomer that provides a crosslinking site include monomers represented by:

general formula (16): $CX^4{}_2=CX^5R_f{}^2X^6$

wherein $X^4$ and $X^5$ are each independently H, F, or an alkyl group having 1 to 5 carbon atoms; $R_f{}^2$ is a linear or branched alkylene group or oxyalkylene group which may have one or more etheric oxygen atoms, which may have an aromatic ring, and in which some or all of hydrogen atoms may be replaced with fluorine atoms; and $X^6$ is an iodine atom, a bromine atom, a nitrile group, a carboxyl group, an alkoxycarbonyl group, a hydroxyl group, a vinyl group, an azide group, a sulfonyl azide group, a carbonyl azide group, or alkyne group. The alkyl group may be an ethylnyl group.

Examples of the monomer that provides a crosslinking site include a fluoromonomer represented by:

general formula (17) : $CX^{16}{}_2=CX^{16}-Rf^{16}CHR^{16}X^{17}$

wherein $X^{16}$ is each independently a hydrogen atom, a fluorine atom, or $CH_3$, $Rf^{16}$ is a fluoroalkylene group, a perfluoroalkylene group, a fluoro(poly)oxyalkylene group, or a perfluoro(poly)oxyalkylene group, $R^{16}$ is a hydrogen atom or $CH_3$, and $X^{17}$ is an iodine atom or a bromine atom; a fluoromonomer represented by:

general formula (18): $CX^{16}{}_2=CX^{16}-Rf^{17}X^{17}$

wherein $X^{16}$ is each independently a hydrogen atom, a fluorine atom, or $CH_3$, $Rf^{17}$ is a fluoroalkylene group, a perfluoroalkylene group, a fluoro(poly)oxyalkylene group, or a perfluoro(poly)oxyalkylene group, and $X^{17}$ is an iodine atom or a bromine atom; a fluoromonomer represented by:

general formula (19): $CF_2=CFO(CF_2CF(CF_3)O)_m(CF_2)_n-X^{18}$

wherein m is an integer of 0 to 5, n is an integer of 1 to 3, and $X^{18}$ is a cyano group, an azide group, a sulfonyl azide group, a carbonyl azide group, a carboxyl group, an alkoxycarbonyl group, an alkyne group, an iodine atom, a bromine atom, or $-CH_2I$; and a monomer represented by: a fluoromonomer represented by

general formula (20): $CF_2=CFCF_2O(CF(CF_3)CF_2O)_m(CF(CF_3))_n-X^{19}$

wherein m is an integer of 0 to 5, n is an integer of 1 to 3, and $X^{19}$ is a cyano group, a carboxyl group, an alkoxycarbonyl group, an iodine atom, a bromine atom, or $-CH_2OH$; and a monomer represented by:

general formula (21) : $CR^{20}{}_2=CR^{20}-Z-CR^{20}= CR^{20}{}_2$

wherein $CR^{20}$ is each independently a hydrogen atom or an alkyl group having 1 to 5 carbon atoms. Z is an alkylene group having 1 to 18 carbon atoms, a cycloalkylene group having 3 to 18 carbon atoms, an alkylene group or oxyalkylene group having 1 to 10 carbon atoms which is at least partially fluorinated, which is linear or branched and may have an oxygen atom, or a (per)fluoropolyoxyalkylene group represented by

$$-(Q)_pCF_2O-(CF_2CF_2O)_m(CF_2O)_n-CF_2-(Q)_p-$$

wherein Q is an alkylene group or an oxyalkylene group. P is 0 or 1. m/n are 0.2 to 5, and having a molecular weight of 500 to 10,000.

$X^{16}$ is preferably a fluorine atom. $Rf^{16}$ and $Rf^{17}$ are preferably a perfluoroalkylene group having 1 to 5 carbon atoms. $R^{16}$ is preferably a hydrogen atom. $X^{18}$ is preferably a cyano group, an alkoxycarbonyl group, an iodine atom, a bromine atom, or $-CH_2I$. $X^{19}$ is preferably a cyano group, an alkoxycarbonyl group, an iodine atom, a bromine atom, or -

$CH_2OH$.

The monomer that provides a crosslinking site is preferably at least one selected from the group consisting of $CF_2=CFOCF_2CF(CF_3)OCF_2CF_2CN$, $CF_2=CFOCF_2CF(CF_3)OCF_2CF_2COOH$, $CF_2=CFOCF_2CF(CF_3)OCF_2CF_2CH_2I$, $CF_2=CFOCF_2CF_2CH_2I$, $CH_2=CFCF_2OCF(CF_3)CF_2OCF(CF_3)CN$, $CH_2=CFCF_2OCF(CF_3)CF_2OCF(CF_3)COOH$, $CH_2=CFCF_2OCF(CF_3)CF_2OCF(CF_3)CH_2OH$, $CH_2=CHCF_2CF_2I$, $CH_2=CH(CF_2)_2CH=CH_2$, $CH_2=CH(CF_2)_6CH=CH_2$, $CF_2=CFO(CF_2)_3CN$ and $CF_2=CFO(CF_2)_5CN$, and is more preferably at least one selected from the group consisting of $CF_2=CFOCF_2CF(CF_3)OCF_2CF_2CN$, $CF_2=CFO(CF_2)_5CN$, and $CF_2=CFOCF_2CF_2CH_2I$ .

The perfluoroelastomer preferably has a glass transition temperature of -30°C or higher, more preferably -20°C or higher, and even more preferably -10°C or higher, from the viewpoint of excellent compression set properties at high temperatures. Also, the perfluoroelastomer preferably has a glass transition temperature of 10°C or lower, more preferably 5°C or lower, and even more preferably 0°C or lower, from the viewpoint of good low-temperature resistance.

The glass transition temperature can be determined as follows: using a differential scanning calorimeter (X-DSC7000, manufactured by Hitachi High-Tech Science Corporation), a DSC curve is obtained by heating 3 mg of a sample at 10°C/min; and the temperature is read at the intermediate point of two intersections between each of the extension lines of the baselines before and after the secondary transition of the DSC curve and the tangent line at the inflection point of the DSC curve.

The perfluoroelastomer preferably has a Mooney viscosity ML (1+20) at 170°C of 30 or more, more preferably 40 or more, and even more preferably 50 or more, from the viewpoint of good heat resistance. Also, the perfluoroelastomer preferably has a Mooney viscosity ML (1+20) at 170°C of 100 or less, more preferably 90 or less, and even more preferably 80 or less, from the viewpoint of good processability.

The Mooney viscosity can be measured at 170°C in accordance with JIS K 6300 using a Mooney viscometer MV 2000E manufactured by ALPHA TECHNOLOGIES.

The perfluoroelastomer can be produced by a conventional method. However, from the viewpoint of a narrow molecular weight distribution of the obtained polymer, easy control of the molecular weight, and being able to introduce an iodine atom or a bromine atom to a terminal, an iodine compound or a bromine compound can also be used as a chain transfer agent. Examples of the polymerization method performed using an iodine compound or a bromine compound include a method in which emulsion polymerization is carried out in an aqueous medium under pressure in the presence of the iodine compound or the bromine compound in a substantially oxygen-free state (iodine transfer polymerization method). Representative examples of the iodine compound or the bromine compound to be used include compounds represented by the general formula:

$$R^{21}I_xBr_y$$

wherein x and y are each an integer of 0 to 2 and satisfy $1 \leq x + y \leq 2$; and $R^{21}$ is a saturated or unsaturated fluorohydrocarbon group or chlorofluorohydrocarbon group having 1 to 16 carbon atoms, or a hydrocarbon group having 1 to 3 carbon atoms, and optionally containing an oxygen atom. By using an iodine compound or a bromine compound, an iodine atom or a bromine atom is introduced into the polymer to function as a cross-linking point.

Examples of the iodine compound or bromine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, CFBrClCFClBr, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodo- and monobromo-substitution product, diiodo- and monobromo-substitution product, and (2-iodoethyl)- and (2-bromoethyl)-substitution product of benzene. These compounds may be used alone or in any combination.

Among these, it is preferable to use 1,4-diiodoperfluorobutane, 1,6-diiodoperfluorohexane, or 2-iodoperfluoropropane, from the viewpoint of polymerization reactivity, cross-linking reactivity, availability, and the like.

The perfluoroelastomer preferably has cyano group (-CN group). The perfluoroelastomer having cyano group (-CN group) can be crosslinked by cyclotrimerization of cyano groups to form a triazine ring, or by forming an imidazole ring using a tetramine compound as a cross-linking agent, and can impart excellent compression set properties and heat resistance to a crosslinked product.

The perfluoroelastomer having cyano group preferably has cyano group (-CN group) at a main chain terminal and/or in a side chain.

Examples of the perfluoroelastomer having cyano group (-CN group) at a terminal of the main chain and/or in a side chain include, copolymers in which the monomer that provides a crosslinking site is a monomer having cyano group (-CN group) among the above-described copolymers of TFE/fluoromonomer represented by formula (13), (14), or (15)/monomer that provides a crosslinking site. In this case, the content of the monomer unit having cyano group

(-CN group) may be 0.1 to 5 mol% based on the total amount of the TFE unit and the fluoromonomer unit represented by formula (13), (14), or (15), from the viewpoint of good crosslinking characteristics and heat resistance, and may even be 0.3 to 3 mol%. Even more preferable compositional features are as described above.

Examples of the monomer having cyano group (-CN group) include monomers represented by:

Formula: $CY^1_2=CY^1(CF_2)_n-CN$

wherein each $Y^1$ is independently a hydrogen atom or a fluorine atom, and n is an integer of 1 to 8;

Formula: $CF_2=CFCF_2Rf^8-CN$

wherein $Rf^8$ is $-(OCF_2)_n-$ or $-(OCF(CF_3))_n-$, and n is an integer of 0 to 5;

Formula: $CF_2=CFCF_2(OCF(CF_3)CF_2)_m(OCH_2CF_2CF_2)_nOCH_2CF_2-CN$

wherein m is an integer of 0 to 5, and n is an integer of 0 to 5;

Formula: $CF_2=CFCF_2(OCH_2CF_2CF_2)_m(OCF(CF_3)CF_2)_nOCF(CF_3)-CN$

wherein m is an integer of 0 to 5, and n is an integer of 0 to 5;

Formula: $CF_2=CF(OCF_2CF(CF_3))_mO(CF_2)_n-CN$

wherein m is an integer of 0 to 5, and n is an integer of 1 to 8;

Formula: $CF_2=CF(OCF_2CF(CF_3))_m-CN$

wherein m is an integer of 1 to 5;

Formula: $CF_2=CFOCF_2(CF(CF_3)OCF_2)_nCF(-CN)CF_3$

wherein n is an integer of 1 to 4;

Formula: $CF_2=CFO(CF_2)_nOCF(CF_3)-CN$

wherein n is an integer of 2 to 5;

Formula: $CF_2=CFO(CF_2)_n-(C_6H_4)-CN$

wherein n is an integer of 1 to 6;

Formula: $CF_2=CF(OCF_2CF(CF_3))_nOCF_2CF(CF_3)-CN$

wherein n is an integer of 1 to 2;

Formula: $CH_2=CFCF_2O(CF(CF_3)CF_2O)_nCF(CF_3)-CN$

wherein n is an integer of 0 to 5;

Formula: $CF_2=CFO(CF_2CF(CF_3)O)_m(CF_2)_n-CN$

wherein m is an integer of 0 to 5, and n is an integer of 1 to 3;

Formula: $CH_2=CFCF_2OCF(CF_3)OCF(CF_3)-CN$;

Formula: $CH_2=CFCF_2OCH_2CF_2-CN$;

Formula: $CF_2=CFO(CF_2CF(CF_3)O)_mCF_2CF(CF_3)-CN$

wherein m is an integer of 0 or more;

Formula: $CF_2=CFOCF(CF_3)CF_2O(CF_2)_n-CN$

wherein n is an integer of 1 or more;

Formula: $CF_2=CFOCF_2OCF_2CF(CF_3)OCF_2-CN$;

Formula: $CF_2=CFO(CF_{2)3}CN$;

Formula: $CF_2=CFO(CF_2)_5CN$.

Each of these monomers can be used singly or in any combination.

Among the above, a monomer represented by the

formula: $CF_2=CF(OCF_2CF(CF_3))_mO(CF_2)_n-CN$

wherein m is an integer of 0 to 5, n is an integer of 1 to 8; and $CF_2=CFOCF_2CF(CF_3)OCF_2CF_2CN$ is more preferable.

These perfluoroelastomers can be produced by a conventional method.

Specific examples of the perfluoroelastomer may include the fluoroelastomers described in International Publication No. WO 97/24381, Japanese Patent Publication No. 61-57324, Japanese Patent Publication No. 4-81608, Japanese Patent Publication No. 5-13961, and the like.

(Co-coagulation)

The composition of the present disclosure can be obtained by co-coagulating a perfluoroelastomer and a PTFE. When the composition is prepared by the co-coagulation method, it is possible to obtain a crosslinked product having excellent plasma resistance and an excellent compression set property when the composition has been crosslinked. In methods other than the co-coagulation method, for example, when a composition is prepared by dry blending, and the obtained composition is crosslinked, the plasma resistance and compression set property of the crosslinked-product do not sufficiently improve, for example, when the crosslinked product is irradiated with $NF_3$ plasma, there is a problem of the crosslinked product being scraped, when the crosslinked product is compressed for a long period of time at a high temperature of about 300°C, there is a problem in that the crosslinked product is crushed due to compression or a problem in that the shape of the crosslinked product is not easily restored even after the crosslinked product is released from compression.

The combination of the perfluoroelastomer and the PTFE upon the co-coagulation is selected in accordance with an intended function in consideration of whether or not the coagulation property of each is similar to each other or whether or not each has an affinity as a polymer.

Examples of a method for co-coagulating the perfluoroelastomer and the PTFE include a method including preparing an aqueous dispersion containing a perfluoroelastomer and a PTFE, and co-coagulating the perfluoroelastomer and the PTFE in the obtained aqueous dispersion.

Examples of a method for preparing the aqueous dispersion include a method involving mixing together an aqueous dispersion containing a perfluoroelastomer and an aqueous dispersion containing a PTFE, a method involving mixing together a powder of a perfluoroelastomer and an aqueous dispersion containing a PTFE, and a method involving mixing together a powder of a PTFE and an aqueous dispersion containing a perfluoroelastomer.

The temperature of each aqueous dispersion at the time of mixing the aqueous dispersion containing a perfluoroelastomer and the aqueous dispersion containing a PTFE is preferably 10°C or higher, more preferably 15°C or higher, and even more preferably 20°C or higher, and is preferably 60°C or lower, and more preferably 50°C or lower.

Examples of a method for co-coagulating the perfluoroelastomer and the PTFE in the aqueous dispersion obtained as described above include a method involving mixing together the aqueous dispersion and a coagulation agent, and a method involving freezing the aqueous dispersion. As the coagulation agent, a well-known coagulation agent such as an acid can be used, and examples thereof include aluminum salts, calcium salts, and magnesium salts, examples of organic coagulation agents include ammonium acetate and ammonium carbonate, and examples of inorganic acid coagulation agents include hydrochloric acid, nitric acid, hydrofluoric acid, sulfuric acid, and trifluoroacetic acid. Among these, when an inorganic acid coagulation agent is used as the coagulation agent, the metal content is small, the aqueous dispersion is clean, a crosslinking site such as cyano group that the perfluoroelastomer has is not damaged during coagulation, a crosslinked product having a high crosslink density can be obtained when the composition has been

crosslinked, and the obtained crosslinked product exhibits excellent plasma resistance and an excellent compression set property.

The temperature at the time of mixing the aqueous dispersion and the coagulation agent is preferably 10°C or higher, more preferably 15°C or higher, and even more preferably 20°C or higher, and is preferably 60°C or lower, and more preferably 50°C or lower. The temperature at the time of mixing the aqueous dispersion and the coagulation agent may be the temperature of a mixture that is obtained by the mixing. When the aqueous dispersion and an aqueous solution containing the coagulation agent are mixed together, the temperature at the time of mixing the aqueous dispersion and the coagulation agent can be adjusted by adjusting the temperatures of the aqueous dispersion and the aqueous solution.

The composition obtained by the co-coagulation is cleaned with water, a small amount of an impurity such as a buffering solution or a salt present in the composition is removed, and the cleaned composition may be then dried with a hot stove or a vacuum dryer. The drying temperature is preferably 40°C or higher, more preferably 50°C or higher, even more preferably 60°C or higher, and is preferably 200°C or lower, more preferably 150°C or lower, even more preferably 100°C or lower.

The form of the composition obtained after the co-coagulation is not limited, may be gum, crumb, a powder, or pellets, and is preferably gum or crumb. The gum is a small granular mass composed of the composition, and the crumb has an irregular massive form since the perfluoroelastomer in the composition is not capable of holding a small granular form as gum at room temperature and consequently fuses each other in the molecular level.

<Other components>

The composition of the present disclosure may further contain a different component other than the perfluoroelastomer and the PTFE. The composition containing the different component may be prepared by adding the different component at the time of co-coagulating the perfluoroelastomer and the PTFE or may be prepared by co-coagulating the perfluoroelastomer and the PTFE and then mixing the co-coagulated composition and the different component. The mixing can be performed using an ordinary polymer processing machine, for example, an open roll, a Banbury mixer, a kneader, or a closed mixer.

Examples of the different component include a filler.

Examples of the filler include imide-based fillers having an imide structure such as polyimide, polyamide-imide, and polyetherimide, organic fillers made of engineering plastic such as polyarylate, polysulfone, polyethersulfone, polyphenylene sulfide, polyether ether ketone, polyether ketone, and polyoxybenzoate, metal oxide fillers such as silicon oxide, aluminum oxide, and yttrium oxide, metal carbides such as silicon carbide and aluminum carbide, metal nitride fillers such as silicon nitride and aluminum nitride, and inorganic fillers such as carbon black, aluminum fluoride, and carbon fluoride.

Among these, carbon black, aluminum oxide, silicon oxide, yttrium oxide, silicon carbide, silicon nitride, polyimide, and fluorocarbon are preferable from the viewpoint of shielding effects against various kinds of plasmas.

Further, the inorganic filler and organic filler may be used alone or blended in a combination of two or more thereof.

Especially in fields not requiring high purity and non-contamination properties, an ordinary additive blended in the composition, such as a processing aid, a plasticizer, and a colorant, can optionally be blended. One or more common cross-linking agents and cross-linking aids different from those described above may also be blended.

The composition may contain an organic basic compound. Examples of the organic basic compound include:

octadecylamine of formula: $CH_3(CH_2)_{17}$-$NH_2$;
erucamide of formula: $H_2N$-C(O)-$(CH_2)_{11}$-CH=CH-$(CH_2)_7CH_3$;
oleamide of formula: $H_2N$-C(O)-$(CH_2)_7$-CH=CH-$(CH_2)_7CH_3$;
hexamethylenediamine of formula: $H_2N$-$(CH_2)_6$-$NH_2$; and
1,8-diazabicycloundec-7-en (DBU) of formula:

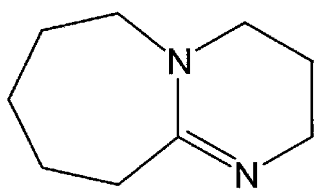

and the like.

(Cross-linking agent and the like)

The composition of the present disclosure may further comprise at least one selected from the group consisting of an inorganic nitride, an organotin compound, an ammonia-generating compound, and a cross-linking agent. When the composition of the present disclosure contains these components such as a cross-linking agent, a crosslinked product can be easily obtained from the composition of the present disclosure.

The inorganic nitride is not limited, and examples include silicon nitride ($Si_3N_4$), lithium nitride, titanium nitride, aluminum nitride, boron nitride, vanadium nitride, and zirconium nitride. Among these, silicon nitride can provide nano-sized fine particles and is thus preferable.

Examples of the organotin compound include tetraphenyltin and triphenyltin.

The ammonia-generating compound is preferably a compound that generates ammonia at 40 to 330°C.

The ammonia-generating compound is preferably urea, a derivative thereof, or an ammonium salt, more preferably urea or an ammonium salt, and even more preferably urea. The ammonium salt may be either an organic ammonium salt or an inorganic ammonium salt. Also, the ammonia-generating compound may be a compound that reacts with a small amount of water to generate ammonia.

Examples of the urea derivative include biurea, thiourea, urea hydrochloride, and biuret.

Examples of the organic ammonium salt include non-fluorine carboxylic or sulfonic acid ammonium salts such as ammonium benzoate, ammonium adipate, and ammonium phthalate.

Examples of the inorganic ammonium salt include the compounds described in Japanese Patent Laid-Open No. 9-111081, such as ammonium sulfate, ammonium carbonate, ammonium nitrate, and ammonium phosphate.

In addition, examples of the ammonia-generating compound also include acetaldehyde ammonia, hexamethylenetetramine, formamidine, formamidine hydrochloride, formamidine acetate, t-butyl carbamate, benzyl carbamate, and phthalamide.

Examples of the cross-linking agent include cross-linking agents used in peroxide cross-linking, polyol cross-linking, polyamine cross-linking, triazine cross-linking, oxazole cross-linking, imidazole cross-linking, and thiazole cross-linking. When the perfluoroelastomer has cyano group (-CN group), the cross-linking agent is preferably at least one selected from the group consisting of an oxazole cross-linking agent, an imidazole cross-linking agent, and a thiazole cross-linking agent.

The cross-linking agent used for peroxide crosslinking may be any organic peroxide that can easily generate a peroxy radical in the presence of heat or a redox system. Specific examples include 1,1-bis(t-butylperoxy)-3,5,5-trimethylcyclohexane, 2,5-dimethylhexane-2,5-dihydroperoxide, di-t-butyl peroxide (Perbutyl D), t-butylcumyl peroxide (Perbutyl C), dicumyl peroxide (Percumyl D, Percumyl D-40, Percumyl D-40 MB(T)), α,α-bis(t-butylperoxy)-p-diisopropylbenzene, 2,5-dimethyl-2,5-di(t-butylperoxy)hexane (Perhexa 25B, Perhexa 25B-40), 2,5-dimethyl-2,5-di(t-butylperoxy)hexyne-3 (Perhexyne 25B, Perhexyne 25B-40), benzoyl peroxide, t-butylperoxybenzene, 2,5-dimethyl-2,5-di(benzoylperoxy)hexane (Perhexa 25Z), t-butylperoxy maleate (t-butyl MA), t-butylperoxyisopropyl carbonate (Perbutyl I-75), methyl ethyl ketone peroxide (Permek D (DR), Permek H (HR, HY), Permek N (NR, NY), Permek S (SR), Permek F (FR), Permek G (GR, GY)), cyclohexanone peroxide (Perhexa H), acetylacetone peroxide (Percure AH, AL), 1,1-di(t-hexylperoxy)-3,3,5-trimethylcyclohexane (Perhexa TMH), 1,1-di(t-hexylperoxy)cyclohexane (Perhexa HC), 1,1-di(t-butylperoxy)-2-methyl cyclohexane (Perhexa MC), 1,1-di(t-butylperoxy)cyclohexane (Perhexa C-80(S), Perhexa C-75(EB), Perhexa C(C), Perhexa C-40, Perhexa C-40 MB(S)), 2,2-di(t-butylperoxy)butane (Perhexa 22), butyl 4,4-di-(t-butylperoxy) pentanoate (Perhexa V, Perhexa V-40(F)), 2,2-di(4,4-di-(t-butylperoxy)cyclohexyl)propane (Pertetra A), p-menthane hydroperoxide (Permentha H), diisopropylbenzene hydroperoxide (Percumyl P), 1,1,3,3-tetramethylbutyl hydroperoxide (Perocta H), cumene hydroperoxide (Percumyl H-80), t-butyl hydroperoxide (Perbutyl H-69), di(2-t-butylperoxyisopropyl)benzene (Perbutyl P, Perbutyl P-40, Peroxymon F-40, Perbutyl P-40 MB(K)), di-t-hexyl peroxide (Perhexyl D), diisobutyryl peroxide (Peroyl IB), di(3,5,5-trimethylhexanoyl) peroxide (Peroyl 355(S)), dilauroyl peroxide (Peroyl L), disuccinic peroxide (Peroyl SA), a mixture of di-(3-methylbenzoyl) peroxide, benzoyl(3-methylbenzoyl) peroxide, and dibenzoyl peroxide (Nyper BMT-K40, Nyper BMT-M), dibenzoyl peroxide (Nyper BW, Nyper BO, Nyper FF, Nyper BS, Nyper E, Nyper NS), di(4-methylbenzoyl) peroxide (Nyper PMB), di-n-propyl peroxydicarbonate (Peroyl NPP-50M), diisopropyl peroxydicarbonate (Peroyl IPP-50, Peroyl IPP-27), di(4-t-butylcyclohexyl) peroxydicarbonate (Peroyl TCP), di(2-ethylhexyl) peroxydicarbonate (Peroyl OPP), di-sec-butylperoxydicarbonate (Peroyl SBP), cumyl peroxyneodecanoate (Percumyl ND, Percumyl ND-50E), 1,1,3,3-tetramethylbutylperoxyneodecanoate (Perocta ND, Perocta ND-50E), t-hexyl peroxyneodecanoate (Perhexyl ND, Perhexyl ND-50E), t-butylperoxyneodecanoate (Perbutyl ND, Perbutyl ND-50E), t-butylperoxy neoheptanoate (Perbutyl NHP), t-hexylperoxy pivalate (Perhexyl PV, Perhexyl PV-50E), t-butylperoxy pivalate (Perbutyl PV, Perbutyl PV-40E), 1,1,3,3-tetramethylbutylperoxy-2-ethyl hexanoate (Perocta O), 2,5-dimethyl-2,5-di(2-ethylhexanoylperoxy)hexane (Perhexa 25 O), t-hexyl peroxy-2-ethyl hexanoate (Perhexyl O, Percure HO(N)), t-butylperoxy-2-ethyl hexanoate (Perbutyl O, Percure O), t-hexyl peroxyisopropyl monocarbonate (Perhexyl I), t-butylperoxy-3,5,5-trimethyl hexanoate (Perbutyl 355), t-butylperoxy laurate (Perbutyl L), t-butylperoxy-2-ethylhexyl monocarbonate (Perbutyl E), t-hexyl peroxybenzoate (Perhexyl Z), t-butyl peroxyacetate

(Perbutyl A), a mixture of t-butylperoxy-3-methyl benzoate and t-butylperoxy benzoate (Perbutyl ZT), t-butylperoxy benzoate (Perbutyl Z), t-butylperoxyallyl monocarbonate (peromer AC), 3,3',4,4'-tetra(t-butylperoxycarbonyl)benzophenone (BTTB-25), and 2,3-dimethyl-2,3-diphenylbutane (Nofmer BC-90). Preferred among these are dialkyl-type organic peroxides, and particularly preferred is 2,5-dimethyl-2,5-di(t-butylperoxy)hexane. Usually, the type and amount of the organic peroxide are selected in consideration of the amount of active -O-O-, the decomposition temperature, and the like.

Further, the cross-linking aid that can be used in this case may be a compound having a reactivity with a peroxy radical and a polymer radical. Examples thereof include polyfunctional compounds having a functional group such as $-CH=CH_2$, $-CH_2CH=CH_2$, $-CF=CF_2$, $-C(CF_3)=CF_2$, $-C(CH_3)=CF_2$, $-CF=CF(CF_3)$, $-CF=CF(CH_3)$, $-C(C_6H_5)=CF_2$, $-CF=CF(C_6H_5)$, $-CH=CF_2$, $-CF=CHF$, $-C(CF_3)=CHF$, $-CF=CH(CF_3)$, $-CH=CF(CF_3)$ and the like wherein "$C_6H_5$" represents a phenyl radical. Specific examples thereof include triallyl cyanurate, triallyl isocyanurate (TAIC), triacryl formal, triallyl trimerite, N,N'-n-phenylene bismaleimide, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine 2,4,6-trione), tris(diallylamine)-S-triazine, triallyl phosphite, N,N-diallylacrylamide, 1,6-divinyldodecafluorohexane, and the like.

Further, examples of a cross-linking aid used together with the peroxide cross-linking agent include a compound represented by formula (31):

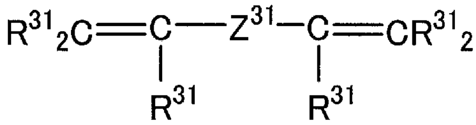

wherein each of the six $R^{31}$ is independently H, a halogen atom, or an optionally halogenated group having 1 to 5 carbon atoms in which an ether bond may be inserted, and $Z^{31}$ is an optionally halogenated linear or branched alkylene group or cycloalkylene group, or a (per)fluoropolyoxyalkylene group, each of which has 1 to 18 carbon atoms and optionally contains a hetero atom.

Examples of the compound represented by formula (31) include a compound represented by formula (32):

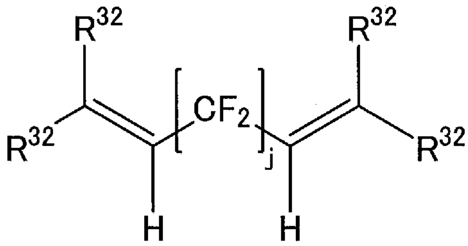

wherein j is an integer of 2 to 10, and preferably an integer of 4 to 8, and each of the four $R^{32}$ is independently H, F or an alkyl group or (per)fluoroalkyl group having 1 to 5 carbon atoms, a compound represented by formula (33):

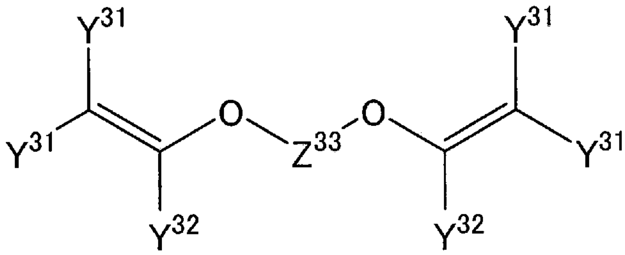

wherein each $Y^{31}$ is independently F, Cl, or H, each $Y^{32}$ is independently F, Cl, H, or $OR^{33}$, where $R^{33}$ is a branched or linear alkyl group that may be partially, substantially, or completely fluorinated or chlorinated, $Z^{33}$ is an optionally fluorinated divalent group having 2 to 10 carbon atoms in which an ether bond may be inserted, preferably $Z^{33}$ is a $-(CF_2)_m-$ group in which m is an integer of 3 to 5, and the compound represented by formula (33) is preferably $F_2C=CF-O-(CF_2)_5-O-CF=CF_2$, and a compound represented by formula (34):

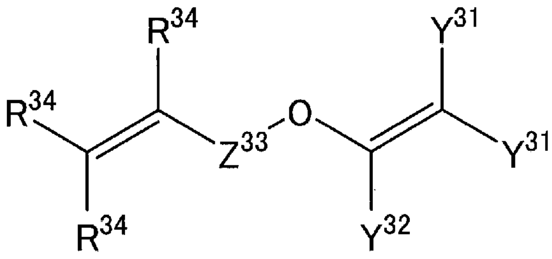

wherein $Y^{31}$, $Y^{32}$, and $Z^{33}$ are as defined above, and each $R^{34}$ is independently H, F, or an alkyl group or (per)fluoroalkyl group having 1 to 5 carbon atoms.

Examples of the cross-linking agent, or cross-linking aid used together with the peroxide cross-linking agent, include compounds having at least one structure represented by formula (35):

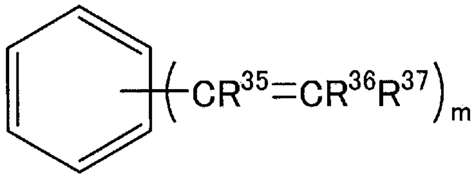

wherein $R^{35}$ to $R^{37}$ are each independently a hydrogen atom, a fluorine atom, an alkyl group, a fluorinated alkyl group, or a substituted or unsubstituted aryl group, and at least one of $R^{35}$ to $R^{37}$ is a fluorine atom or a group containing a fluorine atom; m is an integer of 1 to 5; when m is 2 or more, m-number of $R^{35}$ to $R^{37}$ may be the same or different with each other; and the hydrogen atoms of the benzene ring may be substituted. When m is 1, it is preferable to have two or more of the structures.

Examples of the compound having a structure represented by formula (36) include compounds represented by formula (36):

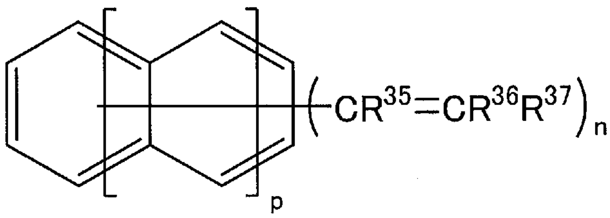

wherein $R^{35}$ to $R^{37}$ are as defined above; p is an integer of 0 to 2; and n is an integer of 2 to 6, compounds represented by formula (37):

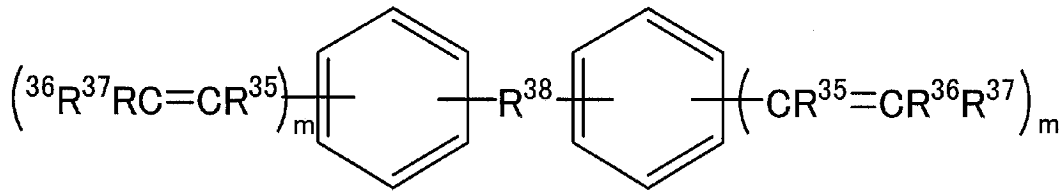

wherein $R^{35}$ to $R^{37}$ are as defined above; $R^{38}$ is a single bond, $-SO_2-$, -O-, -S-, -CO-, a heteroatom-containing group, a substituted or unsubstituted alkylene group, a substituted or unsubstituted cycloalkylene group or a substituted or unsubstituted arylene group; m is an integer of 1 to 5; and a part or all of these groups may be fluorinated.

The heteroatom-containing group is not limited as long as it is a divalent group containing a heteroatom. Examples of the heteroatom include an oxygen atom, a nitrogen atom, a sulfur atom, a boron atom, and a phosphorus atom.

Examples of the cross-linking agent used for polyol crosslinking include polyhydric alcohol compounds such as bisphenol A and bisphenol AF.

Examples of the cross-linking agent used for polyamine crosslinking include polyamine compounds such as hexamethylenediamine carbamate, N,N'-dicinenamiridene-1,6-hexanediamine, and 4,4'-bis(aminocyclohexyl)methane carbamate.

Examples of the cross-linking agents used for oxazole crosslinking, imidazole crosslinking, and thiazole crosslinking include a bisdiaminophenyl-based cross-linking agent, a bis-aminophenol-based cross-linking agent, and a bisaminothiophenol-based cross-linking agent represented by formula (41):

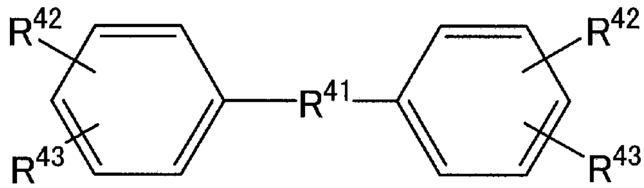

wherein $R^{41}$ is $-SO_2-$, -O-, -CO-, an alkylene group having 1 to 6 carbon atoms, a perfluoroalkylene group having 1 to 10 carbon atoms, a single bond, or a group represented by:

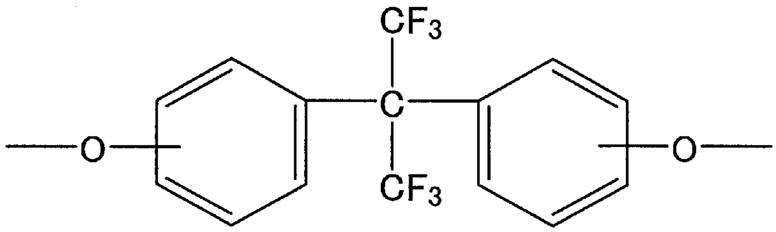

one of $R^{42}$ and $R^{43}$ is $-NH_2$ and the other is $-NHR^{44}$, $-NH_2$, -OH, or -SH, $R^{44}$ is a hydrogen atom, a fluorine atom, or a monovalent organic group, preferably $R^{42}$ is $-NH_2$ and $R^{43}$ is $-NHR^{44}$; preferred specific examples of the alkylene group having 1 to 6 carbon atoms include a methylene group, an ethylene group, a propylene group, a butylene group, a pentylene group, a hexylene group, and the like, and examples of the perfluoroalkylene group having 1 to 10 carbon atoms include:

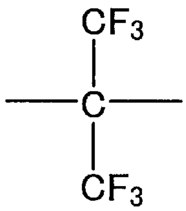

These compounds are known as examples of bisdiaminophenyl compounds in Japanese Patent Publication No. 2-59177, Japanese Patent Laid-Open No. 8-120146, and the like;

a bisamidrazone-based cross-linking agent represented by formula (42):

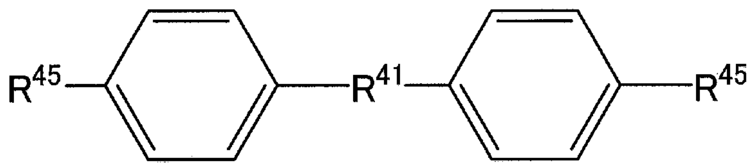

wherein $R^{41}$ is as defined above, and each $R^{45}$ is independently any one of the following groups:

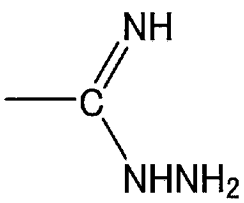

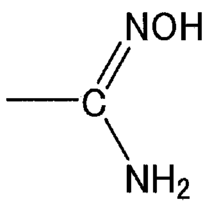

an amidrazone-based cross-linking agent represented by formula (43):

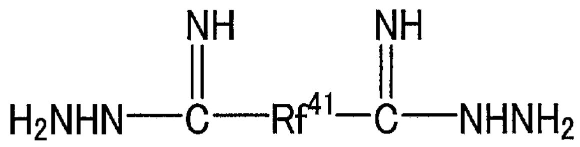

wherein $Rf^{41}$ is a perfluoroalkylene group having 1 to 10 carbon atoms; and a bisamidoxime-based cross-linking agent represented by formula (44):

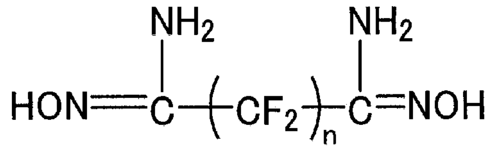

wherein n is an integer of 1 to 10, a compound represented by formula (45): $HN=CR^{45}R^{46}$,

wherein $R^{45}$ is selected from the group consisting of H, $NH_2$, and $NHR^{47}$, $R^{46}$ is selected from the group consisting of Ph, $SO_{2H}$, $NR^{48}R^{49}$, 2-pyridine, and $CH_2CONH_2$, $R^{47}$ is selected from the group consisting of Ph, $NH_2$, and CN, $R^{48}$ is selected from the group consisting of H, NHPh, $CH_2CONH_2$, a linear alkyl group having 1 to 8 carbon atoms, and a branched alkyl group having 1 to 8 carbon atoms, and $R^{49}$ is selected from the group consisting of Ph, $COOC(CH_3)_3$, $NH_2$, $CH_2COOH$, $CSNH_2$, $CNHNH_3^+Cl^-$, p-phenyl CN,

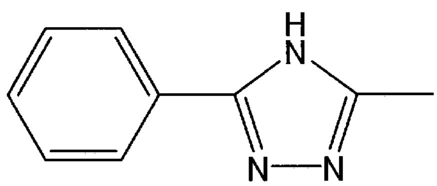

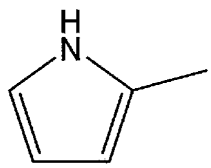

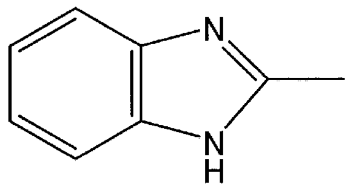

and COPh, and the like. These bisaminophenol-based cross-linking agents, bisaminothiophenol-based cross-linking agents, bisdiaminophenyl-based cross-linking agents, and the like have conventionally been used in crosslinking systems that use a cyano group as a crosslinking point, but these agents also react with a carboxyl group and an alkoxycarbonyl group to form an oxazole ring, a thiazole ring, and an imidazole ring to provide a crosslinked product.

Further, examples of the cross-linking agent include a cross-linking agent represented by formula (46): $X^{41}-(CH_2)_n-R^{50}-(CH_2)_m-X^{41}$, wherein each $X^{41}$ is independently an alkyne group, a nitrile group, or $Y^{41}{}_pN_3$, wherein $Y^{41}$ is SO, $SO_2$, $C_6H_4$, or CO, and p is 0 or 1, n and m are independently integers of 1 to 4, and $R^{50}$ is selected from the group consisting of

i) a fluoroalkylene group having 3 to 10 carbon atoms,
ii) a fluoralkoxylene group having 3 to 10 carbon atoms,
iii) a substituted arylene group,
iv) an oligomer including a copolymerization unit of vinylidene fluoride and perfluoro(methylvinylether),
v) an oligomer including a copolymerization unit of vinylidene fluoride and hexafluoropropylene,
vi) an oligomer including a copolymerization unit of tetrafluoroethylene and perfluoro(methylvinylether), and

vii) an oligomer including a copolymerization unit of tetrafluoroethylene and a hydrocarbon olefin. This cross-linking agent is preferably used together with a perfluoroelastomer having a nitrile group, an azide group, a sulfonyl azide group, a carbonyl azide group, or an alkyne group. For example, the nitrile group of the perfluoroelastomer reacts with the azide group of the cross-linking agent to form a tetrazole ring to provide a crosslinked product.

Examples of a particularly preferred cross-linking agent include a compound having a plurality of 3-amino-4-hydroxyphenyl groups or 3-amino-4-mercaptophenyl groups, or a compound represented by formula (47):

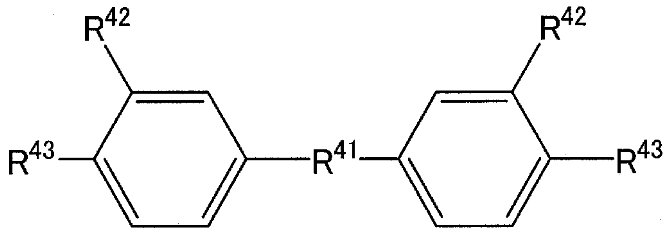

wherein $R^{41}$, $R^{42}$, and $R^{43}$ are as defined above. Specifically, examples include 2,2-bis(3-amino-4-hydroxyphenyl) hexafluoropropane (generic name: bis(aminophenol)AF), 2,2-bis(3-amino-4-mercaptophenyl)hexafluoropropane, tetraaminobenzene, bis-3,4-diaminophenylmethane, bis-3,4-diaminophenyl ether, 2,2-bis(3,4-diaminophenyl)hexafluoropropane, 2,2-bis[3-amino-4-(N-phenylamino)phenyl]hexafluoropropane, 2,2-bis[3-amino-4-(N-methylamino)phenyl]hexafluoropropane, 2,2-bis[3-amino-4-(N-ethylamino)phenyl]hexafluoropropane, 2,2-bis[3-amino-4-(N-propylamino)phenyl]hexafluoropropane, 2,2-bis[3-amino-4-(N-perfluorophenylamino)phenyl]hexafluoropropane, 2,2-bis[3-amino-4-(N-benzylamino)phenyl]hexafluoropropane, and the like.

Among these, from the viewpoints of heat resistance, steam resistance, amine resistance, and good crosslinkability, the cross-linking agent is preferably 2,2-bis[3-amino-4-(N-phenylamino)phenyl]hexafluoropropane.

The content of at least one selected from the group consisting of an inorganic nitride, an organotin compound, an ammonia-generating compound, and a cross-linking agent is preferably 0.05 parts by mass or more, more preferably 0.1 parts by mass or more, even more preferably 0.2 parts by mass or more, and particularly preferably 0.3 parts by mass, and is preferably 10 parts by mass or less, more preferably 5.0 parts by mass or less, even more preferably 2.0 parts by mass or less, particularly preferably 1.0 part by mass or less, based on 100 parts by mass of the perfluoroelastomer.

(Crosslinked product)

The composition can be suitably used as a molding material for obtaining a crosslinked product by crosslinking and molding. A crosslinked product can be obtained by curing the composition of the present disclosure. A crosslinked product of the present disclosure is excellent in terms of durability against $NF_3$ plasma, and moreover, has small compression set even when used at high temperatures such as higher than 300°C.

In the crosslinked product of the present disclosure, the compression set (300°C) measured after leaving the crosslinked product at 300°C for 70 hours at a compressibility of 25% is preferably 60% or less and more preferably 55% or less. The compression set (300°C) can be calculated by leaving the crosslinked product at 300°C for 70 hours while being compressed at a compressibility of 25%, then, releasing the compression, leaving the crosslinked product at 23°C for 30 minutes, and then measuring the thickness of the crosslinked product before and after compression.

The crosslinked product of the present disclosure is less likely to crack even when compressed at a high temperature. The present disclosure provides a crosslinked product that does not crack even when being left at 300°C for 70 hours at a compressibility of 25%. In addition, the present disclosure provides a crosslinked product that does not crack even in the above test for measuring the compression set (300°C) and allows the measurement of the compression set (300°C) (that is, a crosslinked product having a compression set (300°C) value).

The compression set (temperature change from 200°C to 70°C) of the crosslinked product of the present disclosure, which is measured after leaving it at 200°C for 70 hours at a compressibility of 25% and further leaving it at 70°C for 24 hours, is preferably 70% or less and more preferably 65% or less. The compression set (temperature change from 200°C to 70°C) can be calculated by leaving the crosslinked product at 200°C for 70 hours while being compressed at a compressibility of 25%, further leaving the crosslinked product at 70°C for 24 hours, releasing the crosslinked product from the compression, leaving the crosslinked product at 23°C for 30 minutes, and then measuring the thicknesses of the crosslinked product before and after the compression.

The method for obtaining the crosslinked product from the composition may be a method involving forming the composition as a molding material to obtain a preform, and then crosslinking the preform. The method for obtaining the preform from the composition may be a commonly used method, and can be performed by a known method such as a

method involving heating and compressing the composition in a mold, a method involving pressing the composition into a heated mold, and a method involving extruding the composition with an extruder. In the case of an extruded product such as a hose and an electric wire, the crosslinked product can be obtained by heating and crosslinking the composition with steam or the like after extrusion.

The crosslinking is called primary crosslinking and can be performed in the order of primary crosslinking and secondary crosslinking. The primary crosslinking is preferably carried out at 150 to 250°C for 5 to 120 minutes, and more preferably at 170 to 200°C for 5 to 60 minutes. The crosslinking means may be a known crosslinking means, and an example may be press crosslinking.

The secondary crosslinking is preferably carried out at 250 to 320°C for 2 to 48 hours, and more preferably at 280 to 310°C for 5 to 24 hours. In addition, secondary crosslinking may be performed at 180°C to 320°C for 2 to 24 hours or may be performed at 190°C to 310°C for 5 to 20 hours. The temperature may be changed within this temperature range. As the crosslinking means, known crosslinking means may be used, and examples thereof include oven-crosslinking. The crosslinking can be performed under, for example, an air atmosphere or a nitrogen atmosphere.

The crosslinked product of the present disclosure can be suitably used as a sealing material especially for semiconductor manufacturing apparatuses that require heat resistance, and, in particular, semiconductor manufacturing apparatuses where high density plasma irradiation is carried out. Examples of the sealing material include O-rings, squarerings, gaskets, packings, oil seals, bearing seals, and lip seals.

In addition, the molded article can also be used as various polymer products used in semiconductor manufacturing apparatus, such as diaphragms, tubes, hoses, various rubber rolls, and belts. The molded article can also be used as a coating material and a lining material.

Note that the semiconductor manufacturing apparatuses as used herein are not limited to those especially for manufacturing semiconductors, and encompass a wide variety of manufacturing apparatuses used in the semiconductor field where a high level of cleanliness is required, such as those for manufacturing liquid crystal panels and plasma panels, and examples are as follows.

(1) Etching apparatus

Dry etching apparatus
Plasma etching apparatus
Reactive ion etching apparatus
Reactive ion beam etching apparatus
Sputter etching apparatus
Ion beam etching apparatus
Wet etching apparatus
Ashing apparatus

(2) Cleaning apparatus dry etching cleaning apparatus

$UV/O_3$ cleaning apparatus
Ion beam cleaning apparatus
Laser beam cleaning apparatus
Plasma cleaning apparatus
Gas etching cleaning apparatus
Extraction cleaning apparatus
Soxhlet extraction cleaning apparatus
High-temperature high-pressure extraction cleaning apparatus Microwave extraction cleaning apparatus
Supercritical extraction cleaning apparatus

(3) Exposure apparatus

Stepper
Coater/developer

(4) Polishing apparatus
CMP apparatus
(5) Film forming apparatuses

CVD apparatus

Sputtering apparatus

(6) Diffusion/ion implantation apparatus

Oxidation diffusion apparatus
Ion implantation apparatus

The crosslinked product of the present disclosure delivers excellent performance as a sealing material for, for example, CVD apparatuses, plasma etching apparatuses, reactive ion etching apparatuses, ashing apparatuses, and excimer laser exposure machines.
While embodiments have been described above, it will be understood that various changes in form and detail can be made without departing from the gist and scope of the claims.

<1> A first aspect of the present disclosure provides
a composition comprising: a perfluoroelastomer; and a polytetrafluoroethylene, wherein a melt viscosity of the polytetrafluoroethylene is $1.0 \times 10^3$ to $7.0 \times 10^6$ poise, a melting point of the polytetrafluoroethylene is 322°C or higher, and the composition is obtained by co-coagulating the perfluoroelastomer and the polytetrafluoroethylene.
<2> A second aspect of the present disclosure provides the composition according to the first aspect, wherein the perfluoroelastomer has cyano group.
<3> A third aspect of the present disclosure provides the composition according to the first or second aspect, wherein the polytetrafluoroethylene optionally contains a modifying monomer unit, and a content of the modifying monomer unit is 0 to 0.10 mol%, based on all monomer units.
<4> A fourth aspect of the present disclosure provides the composition according to the first or second aspect, wherein the polytetrafluoroethylene contains a modifying monomer unit, and a content of the modifying monomer unit is 0.02 to 0.10 mol%, based on all monomer units.
<5> A fifth aspect of the present disclosure provides the composition according to the fourth aspect, wherein the modifying monomer unit is at least one selected from the group consisting of hexafluoropropylene unit and a perfluorovinyl ether unit.
<6> A sixth aspect of the present disclosure provides the composition according to any one of the first to fifth aspects, wherein an average primary particle size of the polytetrafluoroethylene is 200 nm or more.
<7> A seventh aspect of the present disclosure provides the composition according to any one of the first to sixth aspects, wherein a content of the polytetrafluoroethylene is 1 to 100 parts by mass, based on 100 parts by mass of the perfluoroelastomer.
<8> An eighth aspect of the present disclosure provides the composition according to any one of the first to seventh aspects, wherein the composition is obtained by preparing an aqueous dispersion containing the perfluoroelastomer and the polytetrafluoroethylene, and co-coagulating the perfluoroelastomer and the polytetrafluoroethylene in the obtained aqueous dispersion using an acid.
<9> A ninth aspect of the present disclosure provides the composition according to any one of the first to eighth aspects, further comprising at least one selected from the group consisting of an inorganic nitride, an organotin compound, an ammonia-generating compound, and a cross-linking agent.
<10> A tenth aspect of the present disclosure provides a crosslinked product obtained by crosslinking the composition according to any one of the first to ninth aspects.

## EXAMPLES

Next, embodiments of the present disclosure will now be described by way of Examples, but the present disclosure is not limited only to these Examples.
Various numerical values in the Examples were measured by the following methods.

(Compositional feature of PTFE)

The compositional feature of the PTFE was obtained by $^{19}$F-NMR analysis.

(Average primary particle size of PTFE)

The average primary particle size was determined by calculating the correlation between the transmittance of a predetermined cell injected with a PTFE aqueous dispersion adjusted to 0.15% by mass solids with 550 nm light and the number average primary particle size calculated by measuring the Feret diameter by a transmission electron micrograph,

and then applying the measured transmittance of the obtained sample to the above correlation (calibration curve method).

(Melting point of PTFE)

Regarding the melting point of the PTFE, temperature calibration was performed in advance using a differential scanning calorimeter measuring instrument X-DSC7000 (DSC) manufactured by Hitachi High-Tech Science Corporation and indium and tin as standard samples, about 3 mg of a PTFE having no history of being heated to a temperature of 300°C or higher was put into an aluminum pan and heated within a temperature range of 230°C to 350°C at 10 °C/min under 40 ml/min of a nitrogen stream to perform differential scanning calorimetry, and a temperature corresponding to the minimum point of the melting curve in the above temperature range was measured as the melting point.

(Melt viscosity of PTFE)

The melt viscosity was measured in conformity with ASTM D1238, using a flow tester (manufactured by Shimadzu Corporation) and a 2φ-8L die and keeping 2 g of the sample that had been heated in advance at 380°C for 5 minutes, at the above temperature under a load of 0.7 MPa. "Insoluble" in the table means that the PTFE did not melt and it was not possible to measure the melt viscosity.

(Compositional feature of perfluoroelastomer)

The compositional feature was determined by $^{19}$F-NMR analysis.

(Mooney viscosity of perfluoroelastomer)

The Mooney viscosity was measured using a Mooney viscometer MV2000E manufactured by Alpha Technologies Inc. at 170°C in accordance with JIS K 6300.

(Compression set (300°C))

The compression set was measured according to the method described in ASTM D395 or JIS K 6262. The O-rings produced in the Examples and Comparative Examples were compressed to a compressibility of 25% at normal temperature using a compression device (the O-rings with a thickness (cross-sectional diameter) of 3.5 mm were compressed to a thickness of 2.625 mm).

Next, the compression device to which the compressed O-ring was fixed was gently placed in an electric furnace and left to stand still at 300°C for 70 hours, and then the compression device was removed from the electric furnace. The O-ring was removed from the compression device, the removed O-ring was left to stand still at 23°C for 30 minutes in a thermostatic chamber and the thickness of the O-ring ($t_2$) was measured. The compression set was determined by the equation below. As the compression set becomes closer to 0%, it means that the crosslinked product has a more excellent compression set property.

$$\text{Compression set (\%)} = (t_0 - t_2)/(t_0 - t_1) \times 100$$

$t_0$: original thickness of O-ring (mm)
$t_1$: thickness of spacer (mm)
$t_2$: thickness of O-ring after compression test (mm)

In the above test, $t_0$ was 3.5 mm and $t_1$ was 2.625 mm.

(Cracking rate (300°C))

Regarding the 12 O-rings after the test of "compression set (300°C)", the crack generation states were visually confirmed. The cracking rate was calculated by the following calculation equation. As the cracking rate becomes closer to 0%, it means that the crosslinked product is far less likely to crack even when compressed.

$$\text{Cracking rate (\%)} = \text{(number of cracks generated)}/\text{(number of tests)} \times 100$$

In the test, the number of the tests is 12.

(Compression set (temperature change from 200°C to 70°C))

The compression set was measured in conformity with the method described in ASTM D395 or JIS K6262. The O-ring produced in each of the examples and the comparative examples was compressed up to a compressibility of 25% (the O-ring having a thickness (cross-sectional diameter) of 3.5 mm was compressed up to a thickness of 2.625 mm) at normal temperature using a compressor.

Next, the compressor to which the compressed O-ring was fixed was placed still in an electric furnace, and left at 200°C for 70 hours, and the compressor was then removed from the electric furnace. After that, the compressor to which the compressed O-ring was fixed was placed still in a separate electric furnace, and left at 70°C for 24 hours. The O-ring was removed from the compressor, the removed O-ring was left in a constant temperature chamber at 23°C for 30 minutes, and the thickness ($t_2$) of the O-ring was measured. The compression set was obtained by the following equation.

$$\text{Compression set (\%)} = (t_0 - t_2)/(t_0 - t_1) \times 100$$

$t_0$: Thickness (mm) of O-ring
$t_1$: Thickness (mm) of spacer
$t_2$: Thickness (mm) of O-ring after compression test

In the test, $t_0$ = 3.5 mm, and $t_1$ = 2.625 mm.

(Cracking rate (temperature change from 200°C to 70°C))

Regarding the 12 O-rings after the test of "compression set (temperature change from 200°C to 70°C)", the crack generation states were visually confirmed. The cracking rate was calculated by the following calculation equation. As the cracking rate becomes closer to 0%, it means that the crosslinked product is far less likely to crack even when compressed.

Cracking rate (%) = (number of cracks generated)/(number of tests) × 100

In the test, the number of the tests is 12.

(Plasma resistance (rate of decrease in weight of crosslinked product after plasma processing compared with before plasma processing))

The O-ring (P24 size) produced in each of Examples and Comparative Examples was placed statically in a process chamber. Plasma generated by using a radical generator was fed into the process chamber, and the O-ring was exposed under the following plasma irradiation conditions. The rates of decrease in weight by $NF_3$ remote plasma were calculated from the masses of the O-ring before and after the plasma irradiation.

(Plasma irradiation conditions)

Fluorine radical generator: Astron Atomic Fluorine Generator Model AX7657-2 (manufactured by MKS Japan, Inc.)

$$\text{Gas flow rate: Ar/NF}_3 = 1\ \text{(L/min)}/1\ \text{(L/min)}$$

Pressure: 3 Torr
Irradiation temperature: 250°C
Irradiation time: 12 hours (the O-ring position in the chamber was moved every 2 hours)

The following materials were used in the Examples and Comparative Examples.

Perfluoroelastomer:
$TFE/PMVE/CF_2=CFOCF_2CF(CF_3)OCF_2CF_2CN$ = 59.3/39.9/0.8 (mol%)

$$\text{Mooney Viscosity (ML (1 + 20) (170°C))} = 66$$

Cross-linking agent:

2,2-Bis[3-amino-4-(N-phenylamino)phenyl]hexafluoropropane

PTFE:

PTFE having the physical properties shown in Table 1

Example 1

880 g of an emulsion (solid content concentration of 24% by weight) of perfluoroelastomer particles and 282 g of an emulsion (solid content concentration of 15% by weight) of PTFE particles having physical properties shown in Table 1 were mixed together, and an emulsion mixture was added dropwise to 500 g of 10% nitric acid at 23°C for 10 minutes to perform co-coagulation. The obtained co-coagulated product was cleaned with water, and dried at 70°C using a vacuum dryer, thereby obtaining an elastomer composition containing a fluorine-containing elastomer finely dispersed in the PTFE.

As a result of measuring this elastomer composition by differential thermal analysis (DTA), absorption which was considered to be based on the PTFE was admitted at 327.7°C.

0.9 parts by mass of a crosslinking agent (2,2-bis[3-amino-4-(N-phenylamino)phenyl]hexafluoropropane) was mixed with 120 parts by mass of the obtained elastomer composition, and kneaded with an open roll, thereby obtaining a crosslinkable elastomer composition.

Moreover, the crosslinkable elastomer composition was press-crosslinked at 180°C for 30 minutes and then oven-crosslinked at 290°C for 18 hours, thereby producing a P24-size O-ring. The compression set (300°C), the compression set (temperature change from 200°C to 70°C), and the rate of decrease in weight by $NF_3$ remote plasma were measured by the above-described methods using the obtained O-ring. The results are shown in Table 1.

Examples 2 and 3

Elastomer compositions, crosslinkable elastomer compositions, and O-rings were obtained in the same manner as in Example 1. As a result of the DTA measurement of the elastomer compositions, absorptions that were considered to be based on the PTFEs were admitted at 327.5°C in Example 2 and at 329.5°C in Example 3, respectively.

Comparative Example 1

The emulsion of the perfluoroelastomer particles (23°C) used in Example 1 was added dropwise into 10% nitric acid at 23°C and coagulated. Precipitates were cleaned and then dried, thereby obtaining perfluoroelastomer particles. Meanwhile, the emulsion of the PTFE particles used in Example 1 was coagulated by adding nitric acid thereto. Precipitates were cleaned and dried, thereby obtaining a white PTFE powder.

20 parts by mass of the PTFE powder and 0.9 parts by mass of a crosslinking agent (2,2-bis[3-amino-4-(N-phenylamino)phenyl]hexafluoropropane) were kneaded with an open roll with 100 parts by mass of the perfluoroelastomer particles, thereby obtaining a crosslinkable elastomer composition.

An O-ring was produced in the same manner as in Examples 1 to 3. The compression set (300°C), the compression set (temperature change from 200°C to 70°C), and the rate of decrease in weight by $NF_3$ remote plasma were measured by the above-described methods. The results are shown in Table 1.

Comparative Example 2

An O-ring was produced in the same manner as in Examples 1 to 3 except that the PTFE was changed to a PTFE shown in Table 1, and the same evaluation was performed using the obtained O-ring. The results are shown in Table 1.

[Table 1]

Table 1

| | | | Example 1 | Example 2 | Example 3 | Comparative Example 1 | Comparative Example 2 |
|---|---|---|---|---|---|---|---|
| Physical properties of PTFE | | | | | | | |
| | HFP content | (mol%) | 0.08 | 0.09 | 0.09 | 0.08 | 0.09 |
| | Average primary size | (nm) | 213 | 203 | 208 | 213 | 218 |
| | Melting point | (°C) | 327.5 | 327.0 | 328.9 | 327.5 | 332 |
| | Melt viscosity | ($\times 10^4$ poise) | 26 | 67 | 154 | 26 | Insoluble |
| Physical properties of molded article | | | | | | | |
| | Compression set (300°C) | (%) | 32 | 32 | 33 | Unmeasurable | Unmeasurable |
| | Cracking rate (300°C) | (%) | 8 | 0 | 0 | 100 | 100 |
| | Compression set (200°C→70°C) | (%) | 46 | 50 | 50 | 54 | 53 |
| | Cracking rate (200°C→70°C) | (%) | 0 | 0 | 0 | 0 | 8 |
| | Rate of decrease in weight by remote plasma | (%) | 0.06 | 0.05 | 0.09 | 0.15 | 0.06 |

Examples 4 to 7

Elastomer compositions, crosslinkable elastomer compositions, and O-rings were obtained in the same manner as in Example 1 except that the amount of each material was changed to obtain compositional features shown in Table 2. The results are shown in Table 2 together with the results of Example 1.

Comparative Example 3

0.9 parts by mass of a crosslinking agent (2,2-bis[3-amino-4-(N-phenylamino)phenyl]hexafluoropropane) was kneaded with an open roll with 100 parts by mass of the perfluoroelastomer particles produced in Comparative Example 1, thereby obtaining a crosslinkable elastomer composition. An O-ring was produced from the crosslinkable elastomer composition in the same manner as in Example 1, and the same evaluation was performed using the obtained O-ring. The results are shown in Table 2.

[Table 2]

Table 2

| | | | Example 4 | Example 1 | Example 5 | Example 6 | Example 7 | Comparative Example 3 |
|---|---|---|---|---|---|---|---|---|
| Compositional feature | | | | | | | | |
| | Perfluoro rubber | (phr) | 100 | 100 | 100 | 100 | 100 | 100 |
| | PTFE | (phr) | 10 | 20 | 30 | 40 | 50 | 0 |
| | Crosslinking agent | (phr) | 0.9 | 0.9 | 0.9 | 0.9 | 0.9 | 0.9 |

(continued)

| Physical properties of molded article | | | | | | | | |
|---|---|---|---|---|---|---|---|---|
| | Compression set (300°C) | (%) | 25 | 32 | 38 | 44 | 55 | Unmeasurable |
| | Cracking rate (300°C) | (%) | 17 | 0 | 0 | 0 | 0 | 100 |
| | Compression set (200°C→70°C) | (%) | 42 | 46 | 55 | 60 | 65 | 31 |
| | Cracking rate (200°C→70°C) | (%) | 0 | 0 | 0 | 0 | 0 | 0 |

**Claims**

**1.** A composition comprising:

a perfluoroelastomer; and
a polytetrafluoroethylene,
wherein a melt viscosity of the polytetrafluoroethylene is $1.0 \times 10^3$ to $7.0 \times 10^6$ poise,
a melting point of the polytetrafluoroethylene is 322°C or higher, and
the composition is obtained by co-coagulating the perfluoroelastomer and the polytetrafluoroethylene.

**2.** The composition according to claim 1, wherein the perfluoroelastomer has cyano group.

**3.** The composition according to claim 1 or 2, wherein the polytetrafluoroethylene optionally contains a modifying monomer unit, and a content of the modifying monomer unit is 0 to 0.10 mol% based on all monomer units.

**4.** The composition according to claim 1 or 2, wherein the polytetrafluoroethylene contains a modifying monomer unit, and a content of the modifying monomer unit is 0.02 to 0.10 mol% based on all monomer units.

**5.** The composition according to claim 4, wherein the modifying monomer unit is at least one selected from the group consisting of hexafluoropropylene unit and a perfluorovinyl ether unit.

**6.** The composition according to any one of claims 1 to 5, wherein an average primary particle size of the polytetrafluoroethylene is 200 nm or more.

**7.** The composition according to any one of claims 1 to 6, wherein a content of the polytetrafluoroethylene is 1 to 100 parts by mass based on 100 parts by mass of the perfluoroelastomer.

**8.** The composition according to any one of claims 1 to 7, wherein the composition is obtained by preparing an aqueous dispersion containing the perfluoroelastomer and the polytetrafluoroethylene, and co-coagulating the perfluoroelastomer and the polytetrafluoroethylene in the obtained aqueous dispersion using an acid.

**9.** The composition according to any one of claims 1 to 8, further comprising at least one selected from the group consisting of an inorganic nitride, an organotin compound, an ammonia-generating compound, and a cross-linking agent.

**10.** A crosslinked product obtained by crosslinking the composition according to any one of claims 1 to 9.

## INTERNATIONAL SEARCH REPORT

International application No.
**PCT/JP2023/014080**

**A. CLASSIFICATION OF SUBJECT MATTER**

***C08J 3/00***(2006.01)i; ***C08L 27/12***(2006.01)i; ***C08L 27/18***(2006.01)i
FI: C08J3/00; C08L27/12; C08L27/18

According to International Patent Classification (IPC) or to both national classification and IPC

**B. FIELDS SEARCHED**

Minimum documentation searched (classification system followed by classification symbols)

C08J3/00; C08L27/12; C08L27/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2001/023470 A1 (DAIKIN INDUSTRIES, LTD.) 05 April 2001 (2001-04-05) entire text | 1-10 |
| A | WO 2005/019336 A1 (DAIKIN INDUSTRIES, LTD.) 03 March 2005 (2005-03-03) entire text | 1-10 |
| A | JP 2012-82438 A (DAIKIN INDUSTRIES, LTD.) 26 April 2012 (2012-04-26) entire text | 1-10 |
| A | JP 2018-16795 A (NIPPON VALQUA IND., LTD.) 01 February 2018 (2018-02-01) entire text | 1-10 |
| A | WO 2009/119409 A1 (DAIKIN INDUSTRIES, LTD.) 01 October 2009 (2009-10-01) entire text | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/014080**

| Patent document cited in search report | Publication date (day/month/year) | Patent family member(s) | Publication date (day/month/year) |
|---|---|---|---|
| WO 2001/023470 A1 | 05 April 2001 | US 2004/0147676 A1<br>entire text | |
| WO 2005/019336 A1 | 03 March 2005 | US 2006/0293459 A1<br>entire text | |
| JP 2012-82438 A | 26 April 2012 | (Family: none) | |
| JP 2018-16795 A | 01 February 2018 | US 2019/0161606 A1<br>entire text | |
| WO 2009/119409 A1 | 01 October 2009 | EP 2264100 A1<br>entire text | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018531316 W
- JP 2003026811 A
- JP 10147617 A
- WO 9724381 A
- JP 61057324 A
- JP 4081608 A
- JP 5013961 A
- JP 9111081 A
- JP 2059177 A
- JP 8120146 A